# EUROPEAN PATENT SPECIFICATION

(11) **EP 0 395 444 B1**
(45) Date of publication and mention of the grant of the patent: **31.08.1994**
(21) Application number: 90304644.9
(22) Date of filing: 27.04.1990
(51) Int. Cl.: B60J 10/08

(54) **End member for sealing open end of vehicle weatherstrip**
Endstück zum Verschliessen des offenen Endes einer Fahrzeugdichtung
Embout pour fermer l'extrémité ouverte du bourrage d'un véhicule

(30) Priority: 28.04.1989 JP 109479/89
(43) Date of publication of application: 31.10.1990
(73) Proprietor: KINUGAWA RUBBER INDUSTRIAL CO., LTD., Chiba-shi Chiba-ken (JP)
(72) Inventor: Nakahara, Hisao, c/o Kinugawa Rubber Ind. Co. Ltd., Chiba-shi, Chiba-ken (JP); Sakuma, Hiroshi, c/o Kinugawa Rubber Ind. Co. Ltd., Chiba-shi, Chiba-ken (JP); Eto, Noriaki, c/o Kinugawa Rubber Ind. Co. Ltd., Chiba-shi, Chiba-ken (JP); Nagase, Shinichiro, c/o Kinugawa Rubber Ind Co Ltd, Chiba-shi, Chiba-ken (JP)
(74) Representative: Blanco White, Henry Nicholas

(56) References cited:
- DE-A- 2 018 864
- DE-A- 3 822 050
- DE-B- 1 005 852

## Description

The present invention relates generally to an end member which seals an open end of a weatherstrip for a vehicle, and especially to an end member that can be clipped to an edge of a vehicle on which a weatherstrip is provided to seal an open end of the weatherstrip in a secure manner without becoming easily dislodged.

A structural design of a vehicle door is known in which a front edge of a door sash is folded inwardly so as to abut a side of a front pillar with a certain gap between them while maintaining a smooth exterior surface between the front edge of the door sash and the front pillar to enhance aerodynamic properties and present a fine appearance. In order to seal the gap between the door sash and the front pillar, a weatherstrip is installed on a drip channel which is attached to the side of the front pillar so that a seal lip of the weatherstrip elastically contacts an inner wall of the door sash when the door is closed with another weatherstrip disposed within the gap to provide a double seal.

Typically, the lower end of the weatherstrip installed on the drip channel is finished by die forming or insertion of an end cap to enhance its appearance as seen when the door is opened. For die forming, it is known in the art to flatten an open end of the weatherstrip by pressing it. If an end cap is used, a rubber cap may be inserted into an open end of the weatherstrip to seal it. Alternatively, a resin material may be injected into the open end to seal it.

However, die forming of an open end seal requires an additional manufacturing step (the die forming process) thus increasing manufacturing costs. An end cap inserted into the open end of the weather strip tends to be dislodged because of stress concentrated at the open end and the lack of sufficient gripping force to retain it in position.

DE-A-20 18 864, on which the preamble of claim 1 is based, discloses a rubber weatherstrip with a metal decorative strip clipped to its outer face. Where the weatherstrip stops at a projecting frame part across which the decorative strip extends, the extending end portion of the decorative strip is supported by an intermediate member that fits into the end portion of the decorative strip.

It is one object of the present invention to avoid the disadvantages of the prior art.

It is another object of the invention to provide an end member which can seal an open end of a weatherstrip and will not fall out therefrom easily.

The invention provides an end member for sealing an open end of a weatherstrip which borders an edge of a vehicular structural component or vehicle opening, comprising a sealing portion for sealing the open end of a corresponding weatherstrip and a fastening portion for elastically holding the said edge of such a vehicular structural component or vehicle opening covered by the said weatherstrip; characterised in that said fastening means is arranged to fasten said sealing portion at a position abutting said open end of said weatherstrip, said fastening portion being so contoured as to interlockingly engage at least one correspondingly contoured portion of a cross section of said weatherstrip with a portion of said fastening means overlapping a longitudinal section of said weatherstrip.

Various forms of end member constructed in accordance with the invention, and weatherstrips provided with such end members, will now be described by way of example only with reference to the accompanying drawings, in which:
Fig. 1 is a side view of part of a motor vehicle showing a position at which a weatherstrip is mounted;
Fig. 2 is a cross-sectional view taken along the line II-II of Fig. 1 and showing a weatherstrip, according to the invention, mounted between a door sash and a front pillar of a vehicle together with another weatherstrip;
Fig. 3 is a perspective view of a first form of end member and an open end of a weatherstrip installed on a drip channel of a front pillar;
Fig. 4 is a cross-sectional view taken along the line IV-IV of Fig. 3 but showing the end member connected to the open end of the weatherstrip;
Figs. 5 to 9 are perspective views which show further forms of end member, each with an open end of a corresponding weatherstrip;

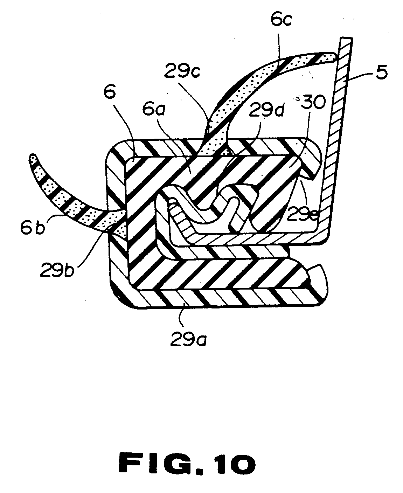

Fig. 10 is a cross-sectional view which shows an end member as shown in Fig. 9 inserted into the open end of the weatherstrip.

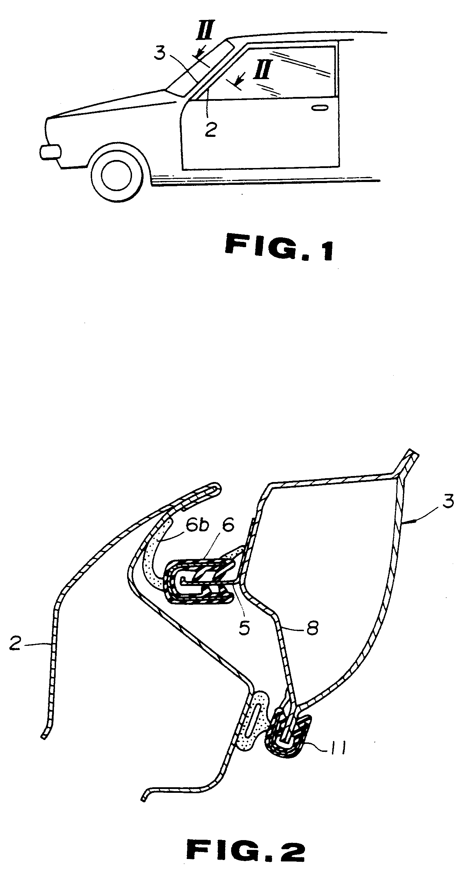

Referring now to the drawings, and initially to Figs. 1 to 3, wherein like numbers refer to like parts throughout several views, one form of end member for sealing an open end of a weatherstrip according to the present invention is shown. The weatherstrip 6, as shown in Fig. 2, borders an edge of a drip channel 5 which is attached to an outer wall 8 of a front pillar 3 to seal elastically between a door sash 2 and the front pillar, together with another weatherstrip 11.

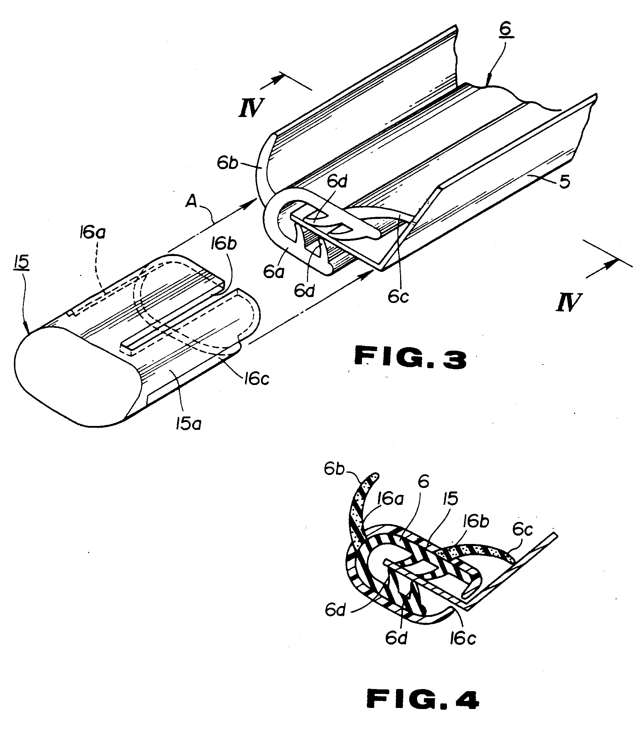

The weatherstrip 6 is formed with a U-shaped welt portion 6a (see Fig. 3), curved seal lips 6b and 6c extending outwardly from the welt portion, and a plurality of inner lips 6d integrally formed on inner surfaces of side walls of the welt portion. The seal lip 6b elastically contacts an inner panel of the door sash 2 of a closed door, the seal lip 6c elastically contacts a bonding section of the drip channel 5 to the front pillar 3, and the inner lips 6d engage with the drip channel 5.

The end member 15 takes the form of a cap. This end cap 15 is made of an elastically deformable synthetic resin and includes slits 16a, 16b, and 16c formed in a clip portion 15a thereof for receiving the seal lips 6b and 6c and drip channel 5 when the end cap is installed on an end of the weatherstrip (see Fig. 4). A hollow portion of the end cap 15 is slightly smaller in cross-section than the welt portion 6a of the weatherstrip 6 and thus fitting of the end cap over the end of the weatherstrip causes the end portion of the weatherstrip to be pressed against the drip channel with slight elastic deformation of a portion of the weatherstrip covered by the end cap, fastening that portion to the drip channel. Provision of the slits 16a, 16b, and 16c enhances the elastic force provided by the clip portion 15a to retain the weatherstrip on the drip channel in cooperation with the elastic deformation of the weatherstrip, while also preventing the end cap from becoming dislodged from the end portion of the weatherstrip.

With this arrangement, end sealing of the weatherstrip 6 is easily carried out by inserting the end cap 15 in a direction indicated by an arrow A in Fig. 3, without reducing the sealing effect provided by the seal lips 6b and 6c.

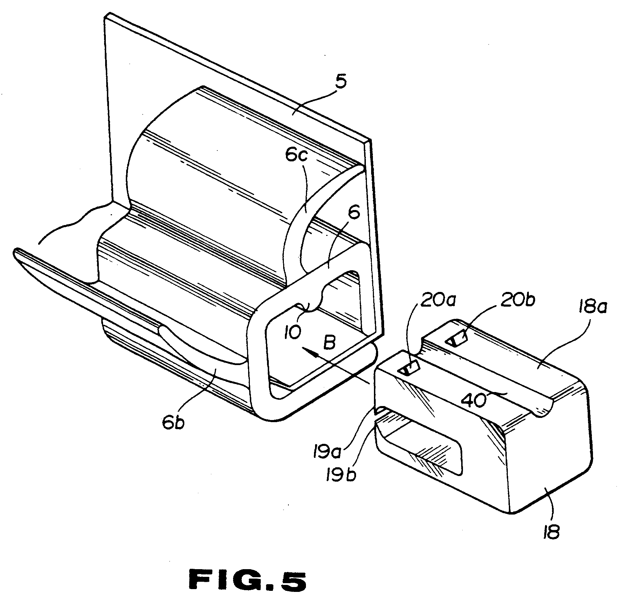

Referring to Fig. 5, a second form of weatherstrip 6 has a protrusion 10 formed on an inside upper wall, and no inner lips are provided. A second form of end member 18 is in the form of a C-shaped clip and includes tapered lips 19a and 19b on two distal portions thereof, a pair of protrusions 20a and 20b on an upper front section thereof, and a groove 40 for receiving the protrusion 10 of the weatherstrip. The weatherstrip 6 borders a drip channel 5 so that a bottom plate of the drip channel engages a lower portion of the weatherstrip.

With this arrangement, insertion of the end clip 18 into an open end of the weatherstrip 6 in a direction indicated by an arrow B causes the upper lip 19a to engage the bottom plate of the drip channel 5 and the lower lip 19b to engage the bottom of the weatherstrip, so that the drip channel 5 and the weatherstrip 6 are gripped tightly between the lips 19a and 19b. That, together with engagement of the protrusions of 20a and 20b with an inside surface of an upper wall of the weatherstrip, securely fastens the weatherstrip to the drip channel 5, sealing the open end of the weatherstrip and preventing the end clip from becoming dislodged.

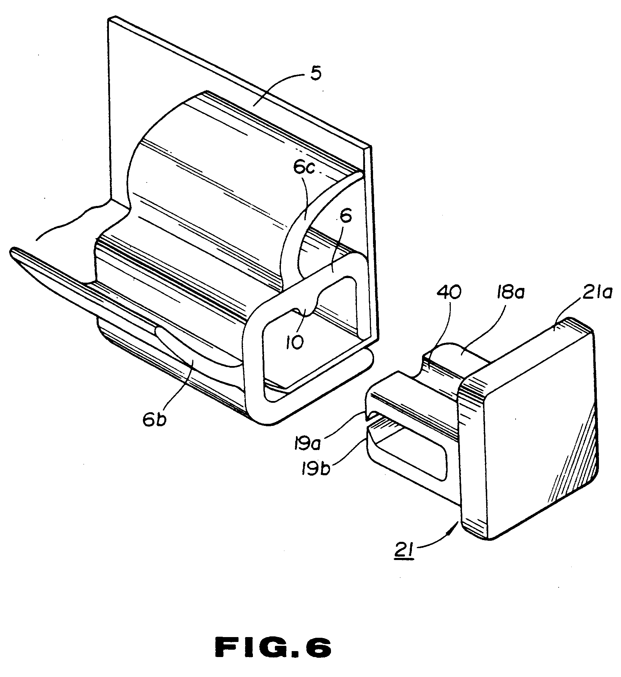

Referring to Fig. 6, a third form of end member 21 includes a clip portion 18a similar to the second form of end member 18, lips 19a and 19b on both distal portions thereof, and a groove 40 for receiving a protrusion 10 of the weatherstrip, but also has an enlarged head portion 21a.

With this arrangement, insertion of the end clip 21 into an open end of the weatherstrip 6 in a direction indicated by an arrow B until the head portion 21a contacts a peripheral edge of the open end causes the lips 19a and 19b to hold the drip channel 5 and the bottom of the weatherstrip to seal the open end of the weatherstrip via the head portion 21a, preventing foreign matter such as water from being introduced into the interior of the weatherstrip.

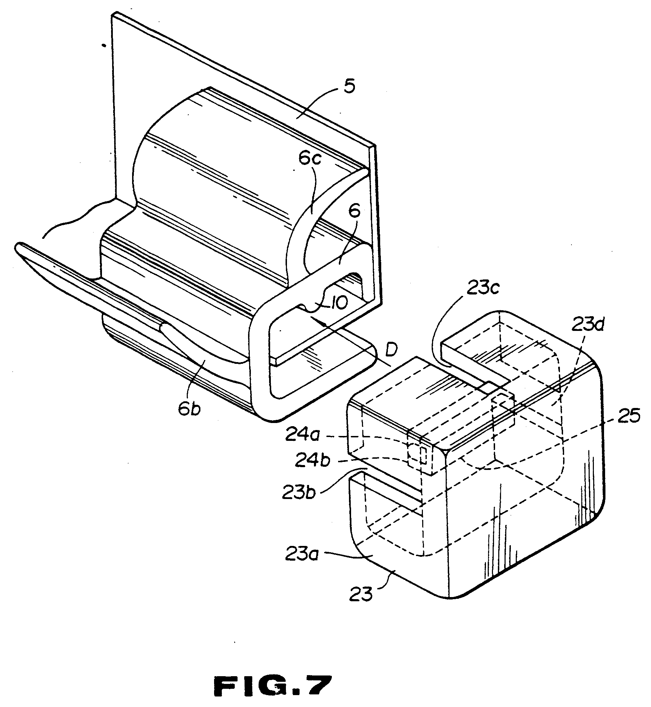

Referring to Fig. 7, a fourth form of end member 23 takes the form of a cap and includes slits 23b, 23c, 23d in a peripheral portion or clip portion 23a thereof for receiving seal lips 6b and 6c of a weatherstrip 6 and a drip channel 5. Within the end cap there is a C-shaped clip portion 25 which has a configuration similar to the third form of end member 21 for clipping to a portion of the drip channel 5, which is inserted into a hollow in the middle portion of the weatherstrip. The clip portion 25 is integrally formed on an end wall of a hollow portion of the end cap 23 and includes tapered lips 24a and 24b for tightly holding the drip channel 5.

With this arrangement, insertion of the end cap 23 into an open end of the weatherstrip 6 in a direction indicated by an arrow D causes the lips 24a and 24b to hold the drip channel 5, and causes the seal lips 6b and 6c and the drip channel 5 to engage the slits 23b, 23c, and 23d, respectively, achieving hermetic sealing of the open end of the weatherstrip.

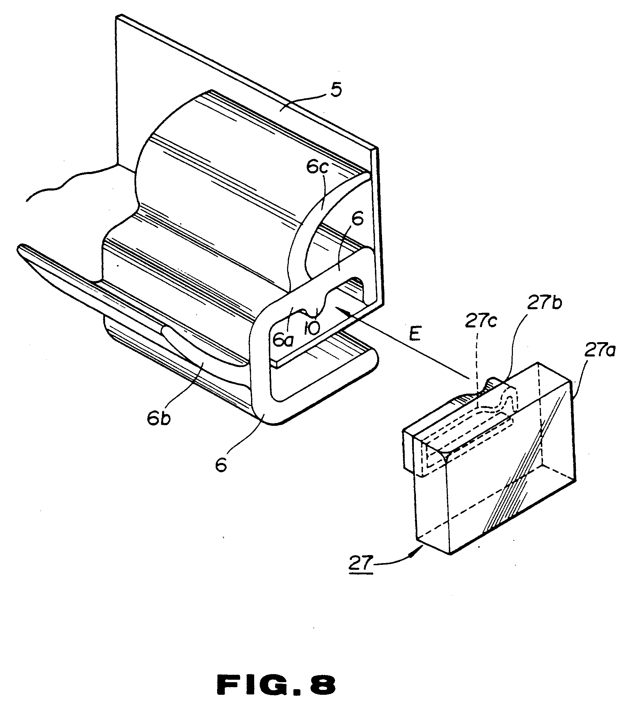

Referring to Fig. 8, a fifth form of end member 27 engages a weatherstrip 6 that includes a projecting portion 10 formed on an upper inside wall thereof. The end member 27 includes a head portion 27a and a C-shaped clip portion 27b that projects from the head portion. The clip portion 27b has a recessed section 27c for receiving the inside projecting portion 10 of the weatherstrip 6. It will be appreciated that insertion of the end member 27 into an open end of the weatherstrip 6 in a direction indicated by an arrow E causes the clip portion 27b to hold the drip channel 5 tightly, with slightly elastic deformation of the clip portion. Additionally, the head portion 27a seals the open end of the weatherstrip hermetically.

Preferably, the size of the clip portion in cross section thereof may be somewhat greater than that of the hollow of the weatherstrip, so that the clip portion urges the weatherstrip to expand slightly, providing tight engagement between them.

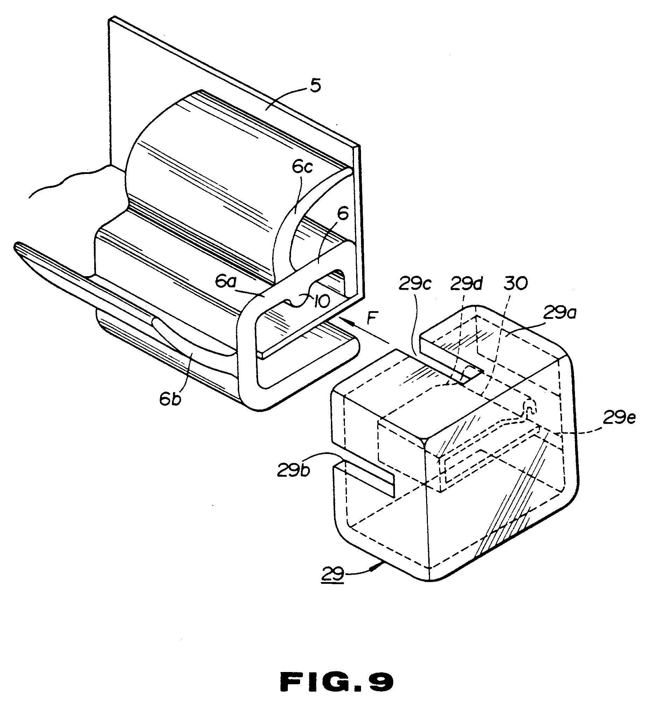

Referring to Fig. 9, a sixth form of end member 29 takes the form of a cap similar to the first form and includes slits 29b, 29c, and 29e for receiving seal lips 6b and 6c of a weatherstrip 6 and a drip channel 5, respectively. A C-shaped clip portion 30 is formed inside the cap and has the same configuration as the clip portion 27b of the fifth form of end member, with a recessed portion 29d for receiving an inner projecting portion 10 of the weatherstrip.

Insertion of the end cap 29 into an open end of the weatherstrip 6 in a direction indicated by an arrow F causes a part of the drip channel covered by the weatherstrip to be inserted into the clip portion 30 and causes the seal lips 6b and 6c to be inserted into the slits 29b and 29c in the cap 29, which surrounds and thereby seals the open end of the weatherstrip.

Therefore, with the above described arrangements, the installation of the end member at the open end of the weatherstrip is a very easy final step in weatherstrip installation and the manufacturing cost is low.

Further, the end member is made of elastically deformable resin material and thus tight engagement between the end member and the weatherstrip or between the end member and the drip channel is provided, preventing the end member from becoming dislodged easily even when stress is concentrated on the end of the weatherstrip.

## Claims

1. An end member (15, 18, 21, 23, 27, 29) for sealing an open end of a weatherstrip (6) which borders an edge (5) of a vehicular structural component or vehicle opening, comprising a sealing portion (15, 18, 21a, 23, 27a, 29) for sealing the open end of a corresponding weatherstrip and fastening portion (15a, 18, 18a, 25, 27b, 30) for elastically holding the said edge of such a vehicular structural component or vehicle opening covered by the said weatherstrip; characterised in that said fastening portion is arranged to fasten said sealing portion at a position abutting said open end of said weatherstrip (6), said fastening portion being so contoured as to interlockingly engage at least one correspondingly contoured portion of a cross section of said weatherstrip with a portion of said fastening portion overlapping a longitudinal section of said weatherstrip.

2. An end member as claimed in claim 1, characterised in that the sealing portion is in the form of a cap (15, 23, 29) that in use covers the open end of said weatherstrip (6).

3. An end member as claimed in claims 1 and 2, characterised in that the fastening portion includes a plurality of slits (16a & b) , 23b & c, 29b &c) for receiving corresponding seal lips (6b, 6c) fformed on said weatherstrip.

4. An end member as claimed in claims 1 to 3, characterised in that the fastening portion includes a plurality of slits (16a-c) for enhancing elastic force to hold the said edge of said vehicle structural component.

5. An end member as claimed in claim 1, characterised in that the fastening portion (18a) is C-shaped in cross section and includes tapered lip portions (19a, 19b) on distal portions thereof engageable with the said edge of said vehicle structural component.

6. An end member as claimed in claim 5, characterised in that said fastening portion (18a) has a protrusion (20a, 20b) arranged to engage an inner wall of said weatherstrip (6) and to preventing the said end member (18) from becoming dislodged from an engaged position thereof.

7. An end member as claimed in claim 5 or claim 6, characterised in that the sealing portion is a plate member (21a) from which said C-shaped fastening portion (18a) projects such that in an engaged position of said fastening portion, said plate member abuts said open end of said weatherstrip (6).

8. An end member as claimed in claim 2 or claim 3, characterised in that said fastening portion (25, 30) is provided in a hollow of said cap (23, 29) so as to grippingly engage a portion of said edge of said vehicle or vehicle structural component (5).

9. An end member as claimed in claim 1, characterised in that said sealing portion (29a) is arranged to surround the open end of said weatherstrip (6), said fastening portion (29d) being insertable into the open end of the weatherstrip to grippingly engage said edge of said vehicle structural component (5) so as to press an inside wall of said weatherstrip against said sealing portion such that the said end member is firmly attached to said open end of said weatherstrip.

10. An end member as claimed in any one of claims 1 and 5 to 9, characterised in that said fastening portion includes a recessed portion (40, 29d) for receiving a protrusion (10) formed on an inner wall of said weatherstrip.

11. An end member as claimed in any one of claims 1 to 10 arranged to be used with a said weatherstrip that is formed of a material of higher resiliency than the material of the end member.

12. An end member as claimed in claim 11 characterised in that a size of said end member (15) is determined so as to subject a portion of said weatherstrip (6) to elastic deformation in an engaged position of said fastening portions.

13. An end member as claimed in any one of claims 1, 2, 6, and 10 characterised in that said fastening portion is arranged to act cooperatively on said vehicle structural component and a portion of said weatherstrip for effecting engagement between said end member and said weatherstrip.

## Patentansprüche

1. Endstück (15, 18, 21, 23, 27, 29) zur Dichtung eines offenen Endes eines Dichtkeders (6), der eine Kante (5) einer Fahrzeugstrukturkomponente oder eine Fahrzeugöffnung einfaßt, die einen Dichtbereich (15, 18, 21a, 23, 27a, 29) zum Dichten des offenen Endes eines entsprechenden Dichtkeders und einen Befestigungsbereich (15a, 18, 18a, 25, 27b, 30) zur elastischen Halterung der Kante einer solchen Fahrzeugstrukturkomponente oder Fahrzeugöffnung, die durch den Dichtkeder abgedeckt wird, aufweist; dadurch gekennzeichnet, daß der Befestigungsbereich so angeordnet ist, um den Dichtbereich an einem Bereich zu befestigen, der an das offene Ende des Dichtkeders (6) angrenzt, wobei der Befestigungsbereich so geformt ist, um miteinander verriegelnd mindestens in einen entsprechend geformten Konturbereich eines Querschnitts des Dichtkeders mit einem Bereich des Befestigungsbereichs, der einen Längsabschnitt des Dichtkeders überlappt, in Eingriff zu treten.

2. Endstück nach Anspruch 1, dadurch gekennzeichnet, daß der Dichtbereich die Form einer Kappe (15, 23, 29) aufweist, die bei Verwendung das offene Ende des Dichtkeders (6) abschließt.

3. Endstück nach Anspruch 1 und 2, dadurch gekennzeichnet, daß der Befestigungsbereich eine Mehrzahl von Schlitzen (16a & b, 23b & c, 29b & c) zur Aufnahme entsprechender Dichtlippen (6b, 6c), die an dem Dichtkeder gebildet sind, umfaßt.

4. Endstück nach einem der Ansprüche 1 bis 3, dadurch gekennzeichnet, daß der Befestigungsbereich eine Mehrzahl von Schlitzen (16a-c) zur Verstärkung einer elastischen Kraft umfaßt, um die Kante der Fahrzeugstrukturkomponente zu halten.

5. Endstück nach Anspruch 1, dadurch gekennzeichnet, daß der Befestigungsbereich (18a) im Querschnitt C-förmig ist und spitz zulaufende Lippenbereiche (19a, 19b) an distalen Bereichen davon umfaßt, die mit der Kante der Fahrzeugstrukturkomponente in Eingriff bringbar sind.

6. Endstück nach Anspruch 5, dadurch gekennzeichnet, daß der Befestigungsbereich (18a) einen Vorsprung (20a, 20b) besitzt, der so angeordnet ist, um an der inneren Wand des Dichtkeders (6) einzugreifen und um zu verhindern, daß das Endstück (18) aus seiner in Eingriff stehenden Stellung verschoben wird.

7. Endstück nach Anspruch 5 oder Anspruch 6, dadurch gekennzeichnet, daß der Dichtbereich ein Plattenteil (21a) ist, von dem der C-förmige Befestigungsbereich (18a) vorsteht derart, daß in einer in Eingriff stehenden Stellung des Befestigungsbereichs das Plattenteil an das offene Ende des Dichtkeders (6) anstößt.

8. Endstück nach Anspruch 2 oder Anspruch 3, dadurch gekennzeichnet, daß der Befestigungsbereich (25, 30) in einem Hohlraum der Kappe (23, 29) vorgesehen ist, um so eingreifend in einen Bereich der Kante des Fahrzeugs oder der Fahrzeugstrukturkomponente (5) in Eingriff zu treten.

9. Endstück nach Anspruch 1, dadurch gekennzeichnet, daß der Dichtbereich (29a) so angeordnet ist, um das offene Ende des Dichtkeders (6) zu umgeben, wobei der Befestigungsbereich (29d) in das offene Ende des Dichtkeders einsetzbar ist, um so greifend mit der Kante der Fahrzeugstrukturkomponente (5) in Eingriff zu treten, um so eine innenseitige Wand des Dichtkeders gegen den Dichtbereich derart zu pressen, daß das Endstück dicht an dem offenen Ende des Dichtkeders befestigt wird.

10. Endstück nach einem der Ansprüche 1 und 5 bis 9, dadurch gekennzeichnet, daß der Befestigungsbereich einen ausgenommenen Bereich (40, 29d) zur Aufnahme eines Vorsprungs (10) umfaßt, der an einer Innenwand des Dichtkeders gebildet ist.

11. Endstück nach einem der Ansprüche 1 bis 10, das so aufgebaut ist, daß es mit einem Dichtkeder verwendet werden kann, der aus einem Material einer höheren Elastizität als das Material des Endstücks gebildet ist.

12. Endstück nach Anspruch 11, dadurch gekennzeichnet, daß eine Größe des Endteils (15) so festgelegt ist, um in einen Bereich des Dichtkeders (6) so einzugreifen, daß er einer elastischen Deformation in einer in Eingriff stehenden Stellung der befestigenden Bereiche unterworfen wird.

13. Endstück nach einem der Ansprüche 1, 2, 6 und 10, dadurch gekennzeichnet, daß der Befestigungsbereich so angeordnet ist, um zusammenwirkend an der Fahrzeugstrukturkomponente und einem Bereich des Dichtkeders zur Bewirkung eines Eingriffs zwischen dem Endstück und dem Dichtkeder zu wirken.

## Revendications

1. Embout (15, 18, 21, 23, 27, 29) pour fermer une extrémité ouverte d'un joint d'étanchéité (10) qui garnit un bord (5) d'un composant structurel de véhicule ou d'une ouverture de véhicule, comprenant une partie d'étanchement (15, 18, 21a, 23, 27a, 29) pour fermer l'extrémité ouverte d'un joint d'étanchéité correspondant et une partie de fixation (15a, 18, 18a, 25, 27b, 30) pour tenir élastiquement ledit bord d'un tel composant structurel de véhicule ou d'ouverture de véhicule recouvert par ledit joint d'étanchéité; caractérisé en ce que ladite partie de fixation est agencée pour fixer ladite partie d'étanchement à une position en butée contre ladite extrémité ouverte dudit joint d'étanchéité (6), ladite partie de fixation étant configurée de façon à venir en prise d'interverrouillage avec au moins une partie configurée de façon correspondante d'une section transversale dudit joint d'étanchéité avec une partie de ladite partie de fixation recouvrant une section longitudinale dudit joint d'étanchéité.

2. Embout selon la revendication 1, caractérisé en ce que la partie d'étanchement se présente sous la forme d'un capuchon (15, 23, 29) qui, en cours d'utilisation, couvre l'extrémité ouverte dudit joint d'étanchéité (6).

3. Embout selon les revendications 1 et 2, caractérisé en ce que la partie de fixation comprend une pluralité de fentes (16a et b, 23b et c, 29b et c) pour recevoir les lèvres d'étanchéité correspondantes (6b, 6c) formées sur ledit joint d'étanchéité.

4. Embout selon les revendications 1 à 3, caractérisé en ce que la partie de fixation comprend une pluralité de fentes (16a-c) pour augmenter la force élastique afin de retenir ledit bord dudit composant structurel de véhicule.

5. Embout selon la revendication 1, caractérisé en ce que la partie de fixation (18a) a une section transversale en forme de C et comprend des parties de lèvre en pointe (19a, 19b) sur ses parties distales pouvant être mises en prise avec ledit bord dudit composant structurel de véhicule.

6. Embout selon la revendication 5, caractérisé en ce que ladite partie de fixation (18a) présente une saillie (20a, 20b) agencée pour venir en prise avec une paroi interne dudit joint d'étanchéité (6) et pour empêcher que ledit embout (18) soit délogé d'une position engagée.

7. Embout selon la revendication 5 ou la revendication 6, caractérisé en ce que la partie d'étanchement est un élément de plaques (21a) duquel ladite partie de fixation configurée en C (18a) fait saillie de façon que dans une position engagée de ladite partie de fixation, ledit élément de plaque bute contre ladite extrémité ouverte dudit joint d'étanchéité (6).

8. Embout selon la revendication 2 ou la revendication 3, caractérisé en ce que ladite partie de fixation (25, 30) est prévue dans un creux dudit capuchon (23, 29) de façon à venir en prise de serrage avec une partie dudit bord dudit véhicule ou composant structurel de véhicule (5).

9. Embout selon la revendication 1, caractérisé en ce que ladite partie d'étanchement (29a) est agencée pour entourer l'extrémité ouverte dudit joint d'étanchéité (6), ladite partie de fixation (29d) étant inserable dans l'extrémité ouverte du joint d'étanchéité pour venir en prise de serrage avec ledit bord dudit composant structurel de véhicule (5) de façon à pousser une paroi interne dudit joint d'étanchéité contre ladite partie d'étanchement de façon que ledit embout soit attaché solidement à ladite extrémité ouverte dudit joint d'étanchéité.

10. Embout selon l'une des revendications 1 et 5 à 9, caractérisé en ce que ladite partie de fixation comprend une partie évidée (40, 29d) pour recevoir une saillie (10) réalisée sur une paroi interne dudit joint d'étanchéité.

11. Embout selon l'une des revendications 1 à 10, agencé pour être utilisé avec ledit joint d'étanchéité qui est réalisé en un matériau d'une élasticité supérieure à celle du matériau de l'embout.

12. Embout selon la revendication 11, caractérisé en ce qu'une taille dudit embout (15) est déterminée de façon à soumettre une partie dudit joint d'étanchéité (6) à une déformation élastique dans une position engagée desdites parties de fixation.

13. Embout selon l'une des revendications 1, 2, 6 et 10, caractérisé en ce que ladite partie de fixation est agencée pour agir de manière coopérative sur ledit composant structurel de véhicule et une partie dudit joint d'étanchéité afin d'exécuter la mise en prise entre ledit embout et ledit joint d'étanchéité.
